# EUROPEAN PATENT APPLICATION

(11) **EP 2 383 453 A2**
(43) Date of publication of application: **02.11.2011**
(21) Application number: 11163873.0
(22) Date of filing: 27.04.2011
(51) Int. Cl.: F02C 9/18, F02K 3/06

(54) **Flow mixing vent system**

(30) Priority: 30.04.2010 US 329720 P; 25.03.2011 US 72206
(71) Applicant: General Electric Company, Schenectady, NY 12345 (US)
(72) Inventor: Klasing, Kevin Samuel, Cincinnati, OH 45215 (US); Proctor, Robert, Cincinnati, OH 45069 (US); Fintel, Bradley Willis, West Chester, OH 45069 (US)
(74) Representative: Gray, Thomas

(57) **Abstract**

A vent system (40) is disclosed having a first flow stream (1) flowing over a first surface (41) in a flow path (4), a conduit (44) that channels a second flow stream (2) into the flow path (4) and an aero-chimney (50) that is in flow communication with the conduit (44) and located near the first surface (41) wherein the aero-chimney (50) has a body (53) having an aerodynamic shape (90) having a leading edge portion (51) and a trailing edge portion (52) such that the first flow stream (1) flows around the aero-chimney (50) near the first surface (41).

## Description

### BACKGROUND OF THE INVENTION

In a gas turbine engine, air is pressurized in a compression module during operation. The air channeled through the compression module is mixed with fuel in a combustor and ignited, generating hot combustion gases which flow through turbine stages that extract energy therefrom for powering the fan and compressor rotors and generate engine thrust to propel an aircraft in flight or to power a load, such as an electrical generator.

Within at least some known gas turbine engines, a portion of high-pressure air, such as, for example, from a compressor, is extracted or bled from the compressor for various reasons. These include, for example, compressor flow bleeding for improving operability, and for other uses such as for turbine cooling, pressurizing bearing sumps, purge air or aircraft environment control. The air is bled off from the compressor using bleed slots located over specific portions or stages of the compressor. The extracted air is then supplied to various locations in the engine via one or more bleed ports.

In at least some known gas turbine engines, during engine operation in some off-design operating conditions, the compressor may pump more air than is required for the combustion process and other needs. In order to manage operability of the engine and combustion performance, a portion of the excess air from the compressor is removed by bleeding using bleed conduits and dumped into a by-pass flow stream. A Transient Bleed Valve (TBV) system is sometimes used for this purpose. Conventional designs for ventilation systems that dump the bleed air into the by-pass flow stream use a "Pepper-Pot" design. However these conventional designs work only for systems with metallic flow path structures that can handle the hot compressor air that is coming through the TBV system. However, for some applications, such as , for example, those having non-metallic flow path structures, the hot compressor air may cause overheating of flow path structures if the hot compressor air comes into contact with these structures. A new approach is required to avoid impingement or direct contact of the hot bleed air on the flow-path structures to prevent overheating of those structures.

Accordingly, it is desirable to have a system that facilitates the reduction of the exposure of the flow path structures to the hot air bled from the compressor or other sources. It would be desirable to have an apparatus that facilitates mixing of two or more flow streams having different pressures, temperatures and other flow properties, while protecting the flow path structures from any potential damage due to exposure to hot air without causing significant disruptions in the flow streams.

### BRIEF DESCRIPTION OF THE INVENTION

The above-mentioned need or needs may be met by exemplary embodiments disclosed herein which provide a vent system having a first flow stream flowing over a first surface in a flow path, a conduit that channels a second flow stream into the flow path and an aero-chimney that is in flow communication with the conduit and located near the first surface wherein the aero-chimney has a body having an aerodynamic shape having a leading edge portion and a trailing edge portion such that the first flow stream flows around the aero-chimney near the first surface.

In one aspect of the invention, a flow vent has an aero-chimney comprising a body having an external portion aerodynamic shape and an internal portion having an internal passage that is capable of receiving a flow stream from a conduit.

### BRIEF DESCRIPTION OF THE DRAWINGS

The subject matter which is regarded as the invention is particularly pointed out and distinctly claimed in the concluding part of the specification. The invention, however, may be best understood by reference to the following description taken in conjunction with the accompanying drawing figures in which:
FIG. 1 is a schematic cross-sectional view of an exemplary gas turbine engine assembly having an exemplary vent system according to an aspect of the present invention.
FIG. 2 is schematic view showing an exemplary embodiment of the present invention that vents a hot air stream into a cold air stream in a flow path.
FIG. 3 is an isometric view of an exemplary flow vent having an aero-chimney according to an exemplary embodiment of the present invention.
FIG. 4 is a side view of the exemplary aero-chimney shown in FIG. 3.
FIG. 5 is an isometric view an exemplary flow field around the exemplary aero-chimney shown in FIG. 3.
FIG. 6 is an isometric view of the exemplary aero-chimney shown in FIG. 3 venting a flow stream into another flow stream.
FIG. 7 is another isometric view of the exemplary aero-chimney shown in FIG. 3 venting a flow stream into another flow stream.
FIG. 8 is a schematic view of another embodiment of the present invention that vents a flow stream at an angle into another flow stream in a flow path.
FIG. 9 is an isometric view of a portion of an aero-chimney according to an alternative embodiment of the present invention.

### DETAILED DESCRIPTION OF THE INVENTION

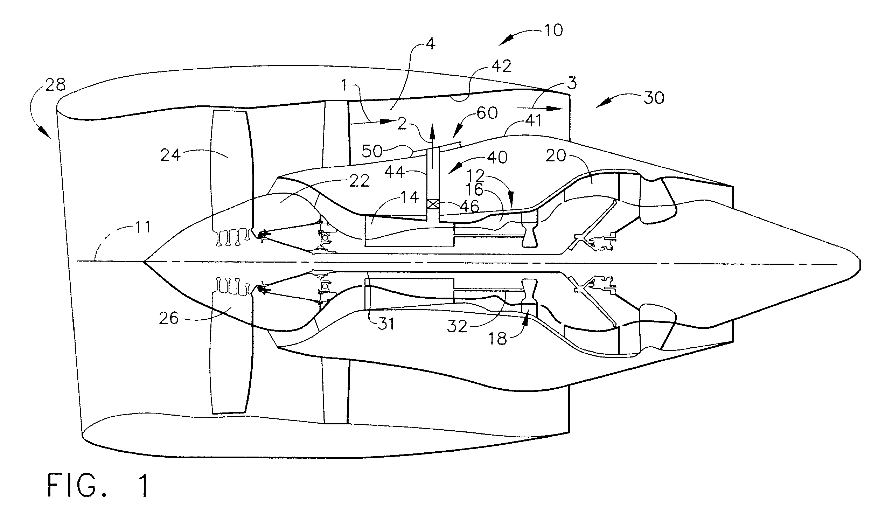

Referring to the drawings wherein identical reference numerals denote the same elements throughout the various views, FIG. 1 shows a schematic cross-sectional view of an exemplary gas turbine engine assembly 10 having an exemplary vent system 40 according to an aspect of the present invention. Figure 1 shows the gas turbine engine assembly 10 having a longitudinal axis 11. The gas turbine engine assembly 10 includes a core gas turbine engine 12 that includes a high-pressure compressor 14, a combustor 16, and a high-pressure turbine 18. In the exemplary embodiment shown in Fig.1, the gas turbine engine assembly 10 also includes a low-pressure turbine 20 that is coupled axially downstream from core gas turbine engine 12, and a fan assembly 22 that is coupled axially upstream from core gas turbine engine 12. Fan assembly 22 includes an array of fan blades 24 that extend radially outward from a rotor disk 26. In the exemplary embodiment shown in Fig.1, engine 10 has an intake side 28 and an exhaust side 30. In the exemplary embodiment, gas turbine engine assembly 10 is a turbofan gas turbine engine that is available from General Electric Company, Cincinnati, Ohio. Core gas turbine engine 12, fan assembly 22, and low-pressure turbine 20 are coupled together by a first rotor shaft 31, and compressor 14 and high-pressure turbine 18 are coupled together by a second rotor shaft 32.

In operation, air flows through fan assembly blades 24 and compressed air is supplied to high pressure compressor 14. The air discharged from fan assembly 22 is channeled to compressor 14 wherein the airflow is further compressed and channeled to combustor 16. Products of combustion from combustor 16 are utilized to drive turbines 18 and 20, and turbine 20 drives fan assembly 22 via shaft 31. Engine 10 is operable at a range of operating conditions between design operating conditions and off-design operating conditions.

The exemplary gas turbine engine assembly 10 shown in FIG. 1 includes an exemplary vent system 40. In the exemplary gas turbine engine assembly 10, at certain selected operating conditions, a portion of the compressed air (referred to herein as bleed air) from compressor 14 controlled using a known control valve 46 enters a conduit 44 (alternatively referred to herein as a bleed passage or bleed flow conduit). The bleed air 2 passes through the conduit 44 and enters an aero-chimney 50 that vents it into a flow path 4, such as a by-pass flow path and mixes with another flow 1, such as a fan flow stream. The bleed flow conduit 44 is made of a material, such as a metal, capable of flowing a bleed flow that is relatively hot. The bleed flow 2 air temperature may vary between about 300 Deg. F and about 1300 Deg. F. The fan flow stream 1 air may vary between about 50 Deg. F and about 300 Deg. F. An aero-chimney 50, described in more detail herein below, is in flow communication with the bleed flow conduit 44 such that the bleed flow 2 is discharged into a flow path 4 wherein the aero-chimney 50 has a body 53 having an aerodynamic shape such that a flow stream 1, such as a fan flow stream in the flow path 4 flows around the aero-chimney 50. Due to the aerodynamic shape of the aero-chimney, the flow losses in the region of the aero-chimney are kept within tolerable limits.

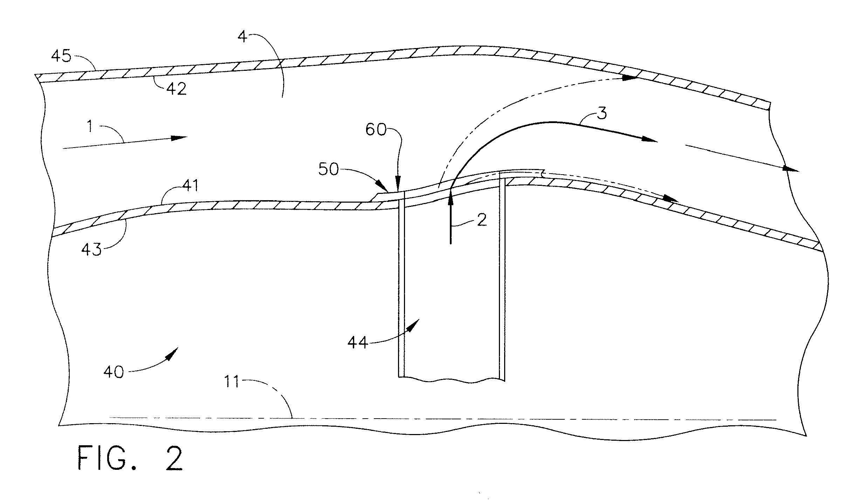

FIG. 2 shows a schematic view of a vent system 40 according to an exemplary embodiment of the present invention. The vent system 40 vents a flow of fluid, such as, for example, the hot bleed air stream from the compressor 14 into a cold air stream 1 in a flow path, such as a by-pass flow of the gas turbine engine 10. As shown in FIG. 2, a first flow stream 1 flows over a first surface 41 in a flow path 4. The flow path is formed at least in part by the surface 41 of a wall 43. In FIG. 2, the flow path 4 is formed by the first surface 41 of an inner wall 43 and the second surface 42 of an outer wall 45. In some applications, such as, for example, in a gas turbine engine, the flow path 4 may be annular around the engine axis 11. A conduit 44 channels a second flow stream 2, such as, for example, a hot bleed air flow from a compressor 14, into an aero-chimney 50. As shown in FIG. 2, the aero-chimney 50 is in flow communication with the conduit 44 such that the flow stream 2 enters the aero-chimney 50 and is vented out from the aero-chimney 50. As shown in FIG. 2, at least a portion of the aero-chimney 50 is located in the flow path 4 and is located near the first surface 41 of the inner wall 43. The aero-chimney 50 has a body 53 that has an aerodynamic shape 90 to minimize losses in the flow path 4. The body 53 has a leading edge portion 51 and a trailing edge portion 52 and is suitably aerodynamically shaped such that the first flow stream 1 flows around the aero-chimney 50 body 53 near the first surface 41. In the flow path 4, the first flow stream 1 and the second flow stream 2 mix and form the mixed flow stream 3. In the exemplary embodiment shown in FIG. 2, a direct impingement of the bleed air stream 2 on the inner wall 43 and/or the outer wall 45 (shown as dotted line in FIG. 2) is avoided by using vent system 40 having a flow vent 60 described herein.

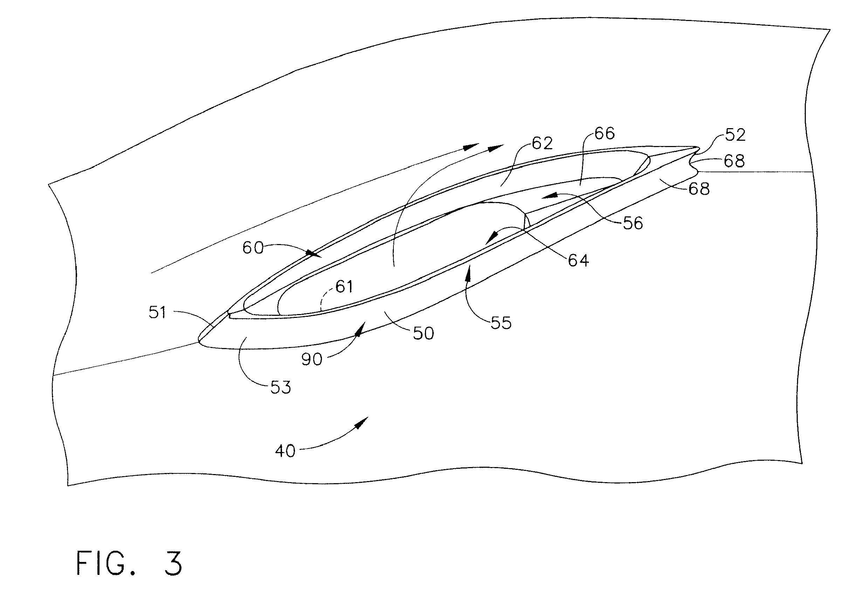

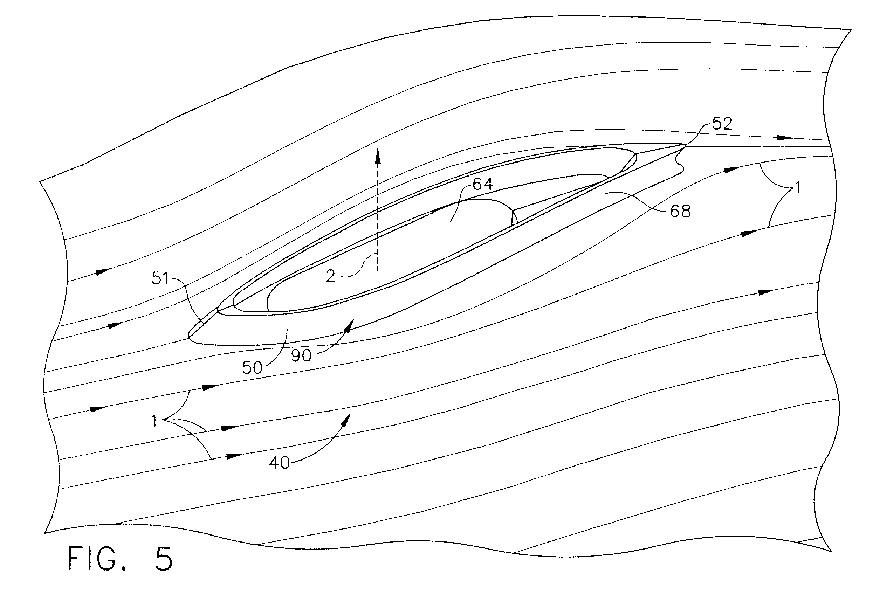

FIG. 3 shows an isometric view of an exemplary flow vent 60 having an aero-chimney 50 according to an exemplary embodiment of the present invention. In the vent system 40 having the flow vent 60, the aero-chimney 50 has a body 53 that has an aerodynamic shape 90. The aerodynamic shape 90 is designed using known aerodynamic principles such that the first flow stream 1 prevents direct contact of the second flow stream 2 with the first surface 41 near, or downstream from, the trailing edge portion 52 of the aero-chimney 50. The flow stream 1 flows around the aerodynamically shaped body 53 from the leading edge portion 51 towards the trailing edge portion 52 and continues to flow adjacent to the flow surface 41, thereby preventing direct contact between the hot flow stream (second flow stream 2) and the inner wall 43. See FIGS. 5-7.

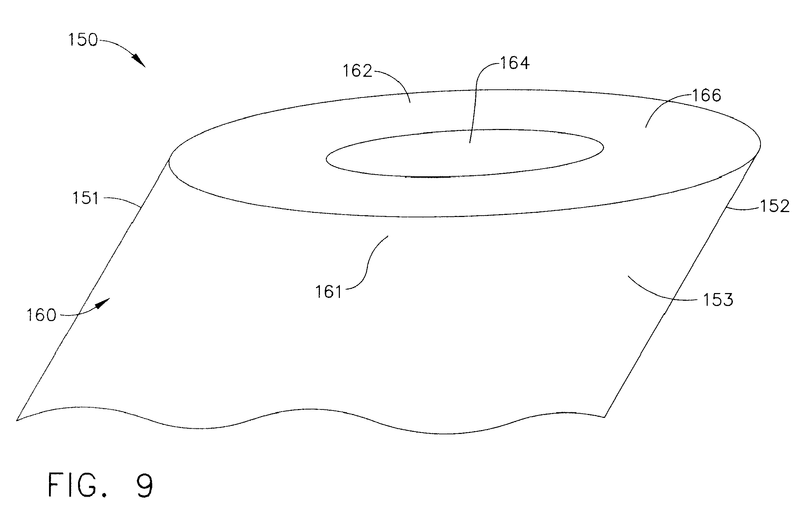

The exemplary flow vent 60 shown in FIG. 3 has an aero-chimney 50 that has a body 53. The body 53 has an external portion 55 and an internal portion 56. The external portion 55 of the body 53 is aerodynamically shaped using known engineering methods. The body 53 has a leading edge portion 51 and a trailing edge portion 52. A first sidewall 61 and a second sidewall 62 extend between the leading edge portion 51 and the trailing edge portion 52. The internal portion 56 has an internal passage 64 that is in flow communication with a supply passage, such as the conduit 44, and is capable of receiving a flow stream 2, such as, for example, the bleed air from a compressor, from the conduit 44. The internal passage 64 shown in the figures herein have an exemplary non-circular cross-section for the passage of flow stream 2. However, the present invention is not limited by the cross-section shape shown. Other suitable cross-section shapes, such as a circular cross-section, providing an adequate flow area, are also considered to be within the scope of the present invention. In the exemplary embodiment shown in FIG. 3, the internal portion 56 has a recess 66 that extends between the sidewalls 61, 62 in order to reduce weight. In the preferred embodiment the sidewalls 61, 62 have a thickness of about 0.1 inches. However, such a recess may not be necessary in some cases. FIG. 9 shows an isometric view of a portion of an aero-chimney 150 of a flow vent 160 according to of an alternative embodiment of the present invention that does not have recess between sidewalls 161, 162. The no-recess top 166 extends from the leading edge portion 151 to trailing edge portion 152 and has an internal passage 166 for flowing the bleed flow.

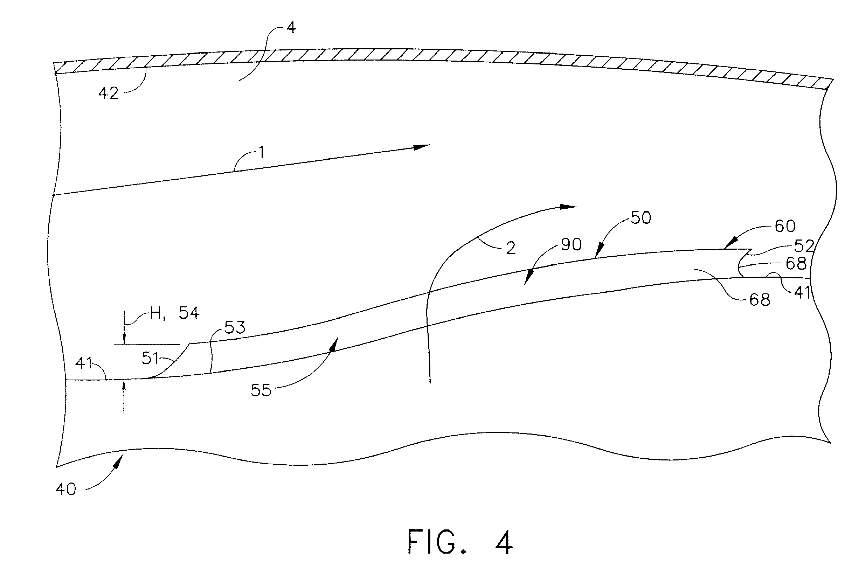

In the exemplary flow vent 60 shown in FIG. 3 the aerodynamically shaped body 53 of the aero-chimney 50 extends to a certain height 54 ("H") from the first surface 41 into the flow path 4. This is shown in FIG. 4 which is a side view of the exemplary aero-chimney shown in FIG. 3. The height "H" 54 of the aerodynamic feature is selected such that the flow stream 2 does not impinge on or otherwise damage the flow surfaces 41 and 42 of the flow path 4. The height "H" 54 of the aero-chimney extending into the flow path 4 is adapted to prevent direct contact of the second flow stream 2 with the second surface 42 and to prevent an overheating of the outer wall 45 by the second flow stream 2. In a gas turbine engine, the flow venting through the aero-chimney 50 may be needed only for certain engine operating conditions. Suitable control means known in the art, such as, for example, a control valve 46 (see FIG. 1), can be used to control the operation of the venting process through a transient bleed valve (TBV) vent system incorporating the present invention. When the TBV system is off (i.e., no compressor flow bleeding and venting), although the aero-chimney body 50 may cause some minor performance loss it is minimized by the aerodynamic shape 90 of the body 53 and suitable height "H". In a preferred embodiment, the height H is between 5% and 50% of the flow span of the flow path 4, where the flow span is defined as the distance between the first surface 41 and the second surface 42 measured perpendicular to the direction of the first flow 1.

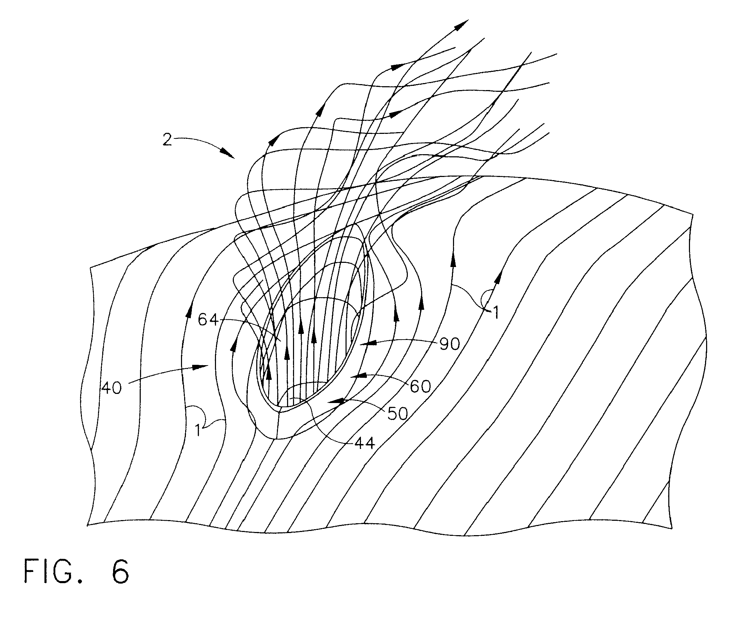

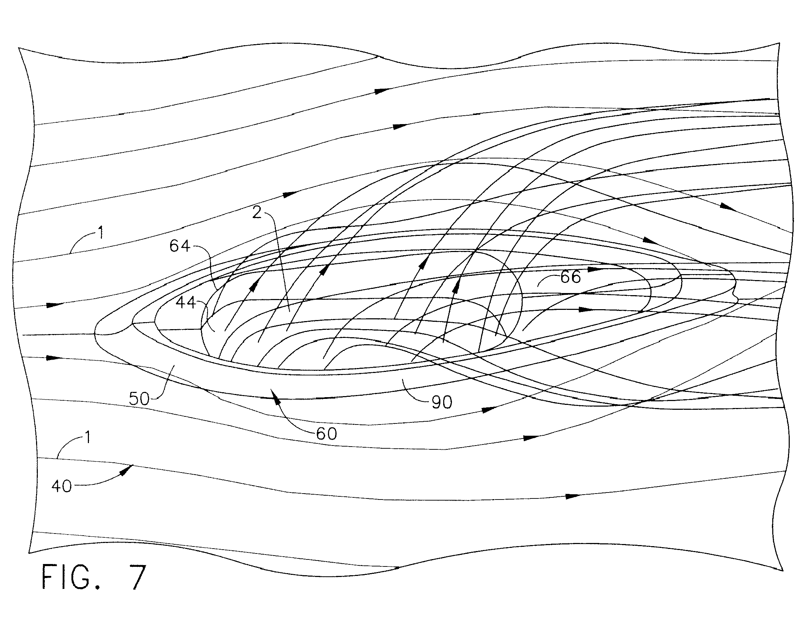

FIGS. 3-7 show the aerodynamic shape 90 of the aero-chimney 50. The aerodynamic shape 90 is designed using known engineering methods such that the first flow stream 1 flows around the suitably shaped body 53 from the leading edge portion to the trailing edge portion 52 and remains close to the first flow surface 41 downstream from the trailing edge portion 52. This is shown in FIGS. 5 and 6 using exemplary flow trajectories for the first flow stream 1. The first flow stream 1 remaining close to the first surface 41 protects the flow path structures, such as the inner wall 42 and outer wall 45, from the second flow stream 2 that may have a significantly higher temperature or other potential detrimental properties. The aerodynamic shape 90 comprises a slanted leading edge 51 portion (see FIG. 3 for example). In the exemplary embodiment shown in FIGS. 3-7, the aerodynamic shape 90 further comprises an arcuate shape 68 for the first sidewall 61 and the second sidewall 62. The arcuate shape 68 is designed using known engineering methods for fluid flow analyses such that the flow streams remain attached to the sidewalls 61, 62 and the first flow surface 41. In the exemplary embodiment shown in FIG. 3, the arcuate shape 68 varies in a chordwise direction between the leading edge portion 51 and the trailing edge portion 52. FIG. 5 shows an isometric view of an exemplary flow field of the first flow stream 1 around an exemplary aero-chimney 50 according to the present invention. FIG. 6 shows an isometric view of an exemplary flow field of the first flow stream 1 around an exemplary aero-chimney 50 and a second flow stream 2 that is vented from the aero chimney 50 according to the present invention. FIG. 7 shows the same flows as FIG. 6, but from a different viewing angle.

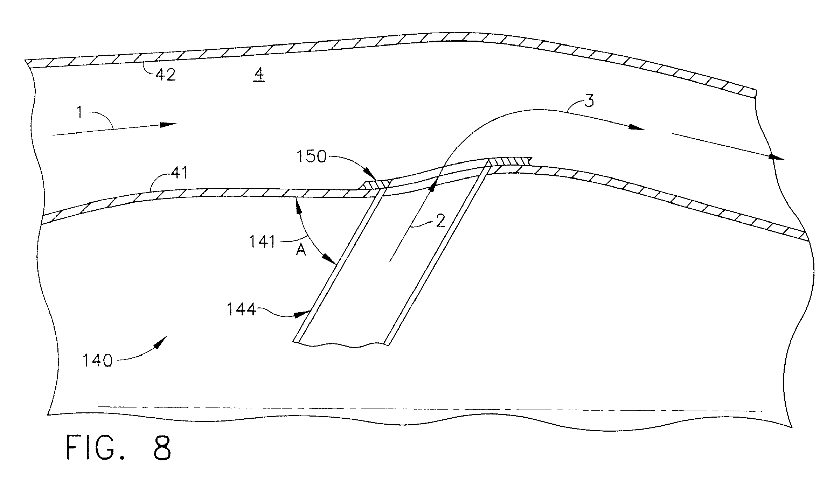

FIG. 8 shows a schematic view of an alternative embodiment of a vent system 140. In this alternative embodiment, the conduit 144 vents a flow stream 2 at an angle into another flow stream 1 in a flow path 4. The angle 141 between the conduit 144 and the flow surface 41 is shown as "A" in FIG. 8. The conduit 44 is oriented at an angle 141 with respect to the first surface 41 such that the second flow stream 2 enters the flow path 4 at an acute angle. The angle 141 "A" is suitably selected using known engineering methods such that the flow stream 2 does not directly impinge or otherwise damage the flow path surfaces 41, 42. The angle "A" is typically between 30 to 90 degrees.

In the exemplary embodiment of the vent system 40 shown herein, the aero-chimney 50 is shown integrally with the conduit 44. However, the present invention is not thus limited. All the features and advantages of the present invention are also obtained by making the aero-chimney 50 as described herein as separate article and coupling it with the conduit 44 using known methods. Such a separate aero-chimney 50 may be inserted to existing vent systems, such as, for example, in a gas turbine engine.

In one aspect of the present invention, in the flow vent 60 described herein, at least a portion of the aero-chimney 50, such as, for example, the body 53, is made from a composite material. Known composite materials may be used. In a preferred embodiment, of a flow vent 60 described herein, at least a portion of the aero-chimney 50, such as for example the internal portion 56, is made from a metallic material that can withstand a high temperature fluid flow, such as, for example, a compressor bleed flow having temperatures in the range of about 300 Deg. F to about 1300 Deg. F. Other known materials having suitable high temperature capabilities may also be used. In an alternative embodiment of the present invention, in flow vent 60, the external portion 55 of the aero-chimney 50 is made from a composite material and the internal portion 56 of the aero-chimney 50 having the internal passage 64 is made from a metallic material. Other known materials having suitable high temperature capabilities may also be used for these internal portions 56.

In one aspect of the present invention, in a vent system 40, such as described herein, either the inner wall 43 or the outer wall 45, or both, may be made from a composite material. This may be particularly advantageous in some applications, such as, for example, in a gas turbine engine 10 shown in FIG. 1. In a preferred embodiment for high temperature applications, the vent system 40 has an the aero-chimney body 53 that is made from a metallic material. Known materials, such as, for example, titanium alloys or nickel-base super alloys are suitable. Other suitable high temperature capable, known, materials may also be used. In alternative embodiments, for a system using a composite wall 43, the vent system 40 can use an aero-chimney body 53 made from a compatible composite material, while using internal portions 56 made from metallic or other suitable high temperature capable materials.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A vent system comprising:
   a first flow stream flowing over a first surface in a flow path;
   a conduit that channels a second flow;
   an aero-chimney that is in flow communication with the conduit and located near the first surface wherein the aero-chimney has a body having an aerodynamic shape having a leading edge portion and a trailing edge portion such that the first flow stream flows around the aero-chimney near the first surface.
2. A vent system according to clause 1 wherein the aerodynamic shape of the aero-chimney is adapted to prevent direct contact of the second flow stream with the first surface near the trailing edge portion of the aero-chimney.
3. A vent system according to clause 1 wherein the aero-chimney body is made from a metallic material.
4. A vent system according to clause 1 wherein the aero-chimney body is made from a composite material.
5. A vent system according to clause 1 wherein the first surface forms a portion of an inner wall made from a composite material.
6. A vent system according to clause 5 wherein the aerodynamic shape of the aero-chimney is adapted to prevent an overheating of the inner wall by the second flow stream.
7. A vent system according to clause 1 wherein flow path is formed between the first surface and a second surface of an outer wall.
8. A vent system according to clause 7 wherein the outer wall is made from a composite material.
9. A vent system according to clause 7 wherein the height of the aero-chimney extending into the flow path is adapted to prevent direct contact of the second flow stream with the second surface.
10. A vent system according to clause 7 wherein the height of the aero-chimney extending into the flow path is adapted to prevent an overheating of the outer wall by the second flow stream.
11. A vent system according to clause 1 wherein the aero-chimney is made integrally with the conduit.
12. A vent system according to clause 1 wherein the aero-chimney is a separate component from the conduit.
13. A vent system according to clause 1 wherein the conduit is oriented at an angle with respect to the first surface such that the second flow stream enters the flow path at an acute angle.
14. A flow vent comprising:
   an aero-chimney comprising a body having an external portion aerodynamic shape having a leading edge portion, a trailing edge portion, first sidewall and a second sidewall wherein the first and second sidewalls extend between the leading edge portion and the trailing edge portion; and
   an internal portion having an internal passage that is capable of receiving a flow stream from a conduit.
15. A flow vent according to clause 14 wherein at least a portion of the aero-chimney is made from a metallic material.
16. A flow vent according to clause 14 wherein at least a portion of the aero-chimney is made from a composite material.
17. A flow vent according to clause 14 wherein the external portion is made from a composite material and the internal portion is made from a metallic material
18. A flow vent according to clause 14 further comprising a recess in the internal portion.
19. A flow vent according to clause 14 wherein the internal passage has a non-circular cross section.
20. A flow vent according to clause 14 wherein at least a portion of the first and second sidewalls has an arcuate shape.
21. A flow vent according to clause 20 wherein the arcuate shape varies between the leading edge portion and the trailing edge portion.
22. A gas turbine engine comprising a compressor, a bleed flow conduit capable of flowing a bleed flow and an aero-chimney that is in flow communication with the bleed flow conduit such that the bleed flow is discharged into a flow path wherein the aero-chimney has a body having an aerodynamic shape such that a flow stream in the flow path flows around the aero-chimney.

## Claims

1. A vent system (40) comprising:
a first flow stream (1) flowing over a first surface (41) in a flow path (4);
a conduit (44) that channels a second flow stream (2);
an aero-chimney (50) that is in flow communication with the conduit (44) and located near the first surface (41) wherein the aero-chimney (50) has a body (53) having an aerodynamic shape (90) having a leading edge portion (51) and a trailing edge portion (52) such that the first flow stream (1) flows around the aero-chimney (50) near the first surface (41).

2. A vent system (40) according to claim 1, wherein the aerodynamic shape (90) of the aero-chimney is adapted to prevent direct contact of the second flow stream (2) with the first surface (41) near the trailing edge portion (52) of the aero-chimney (50).

3. A vent system (40) according to claim 1 or 2, wherein the first surface (41) forms a portion of an inner wall (43) made from a composite material.

4. A vent system (40) according to claim 3 wherein the aerodynamic shape (90) of the aero-chimney (50) is adapted to prevent an overheating of the inner wall (43) by the second flow stream (2).

5. A vent system (40) according to any of the preceding claims, wherein flow path (4) is formed between the first surface (41) and a second surface (42) of an outer wall (45).

6. A vent system (40) according to claim 5, wherein the outer wall (45) is made from a composite material.

7. A vent system (40) according to claim 5, wherein the height (54) of the aero-chimney extending into the flow path (4) is adapted to prevent direct contact of the second flow stream (2) with the second surface (42).

8. A vent system (40) according to any of the preceding claims, wherein the conduit (44) is oriented at an angle (141) with respect to the first surface (41) such that the second flow stream (2) enters the flow path (4) at an acute angle.

9. A flow vent (60) comprising:
an aero-chimney (50) comprising a body (53) having an external portion (55) aerodynamic shape (90) having a leading edge portion (51), a trailing edge portion (52), first side wall (61) and a second side wall (62) wherein the first and second side walls (61, 62) extend between the leading edge portion (51) and the trailing edge portion (52); and
an internal portion (56) having an internal passage (64) that is capable of receiving a flow stream (2) from a conduit (44).

10. A flow vent (60) according to claim 9, further comprising a recess (66) in the internal portion (56).

11. A flow vent (60) according to claim 9 or 10, wherein at least a portion of the first and second side walls (61, 62) has an arcuate shape (68).

12. A flow vent (60) according to claim 11, wherein the arcuate shape (68) varies in a chordwise direction between the leading edge portion (51) and the trailing edge portion (52).

13. A gas turbine engine (10) comprising a compressor (16), a bleed flow conduit (44) capable of flowing a bleed flow and an aero-chimney (50) that is in flow communication with the bleed flow conduit (44) such that the bleed flow is discharged into a flow path (4) wherein the aero-chimney (50) has a body (53) having an aerodynamic shape (90) such that a flow stream in the flow path flows around the aero-chimney (50).
